# EUROPÄISCHE PATENTANMELDUNG

(11) **EP 4 438 675 A1**
(43) Veröffentlichungstag der Anmeldung: **02.10.2024**
(21) Anmeldenummer: 23165833.7
(22) Anmeldetag: 31.03.2023
(51) Int. Cl.: C08L 7/00, B60C 1/00, C08K 5/00, C08L 9/00

(54) **KAUTSCHUKMISCHUNG UND REIFEN**

(71) Anmelder: Continental Reifen Deutschland GmbH, 30175 Hannover (DE)
(72) Erfinder: Schax, Fabian, 30165 Hannover (DE); Müller, Norbert, 30165 Hannover (DE); Lhuillier, Nadia, 30165 Hannover (DE)
(74) Vertreter: Continental Corporation

(57) **Zusammenfassung**

Die Erfindung betrifft eine schwefelvernetzbare Kautschukmischung, insbesondere für den Laufstreifen von Fahrzeugluftreifen, enthaltend wenigstens folgende Bestandteile:
- zumindest einen Dienkautschuk,
- 5 bis 70 phr (Gewichtsteile, bezogen auf 100 Gewichtsteile der gesamten Kautschuke in der Mischung) zumindest eines zu mehr als 95 % auf biologisch nachwachsenden Rohstoffen basierenden Terpenharzes,
- 5 bis 60 phr zumindest eines Weichmachers, der kein Mineralölweichmacher ist, und
- 40 - 350 phr zumindest eines Füllstoffes.

## Beschreibung

Die Erfindung betrifft eine schwefelvernetzbare Kautschukmischung, insbesondere für den Laufstreifen von Fahrzeugluftreifen.

Die Erfindung betrifft ferner einen Fahrzeugluftreifen mit zumindest einem Bauteil, das aus einer solchen mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Dabei bestehen Zielkonflikte zwischen den meisten der bekannten Reifeneigenschaften wie Nassgriffverhalten, Bremsverhalten, Handling-Verhalten, Rollwiderstand, Wintereigenschaften, Abriebverhalten und Reißeigenschaften. Es wurden bereits vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen.

Zusätzlich zu den vorgenannten Zielsetzungen im Hinblick auf die Mischungs- und Vulkanisateigenschaften ist man heutzutage bestrebt, in Kautschukmischungen für Fahrzeugreifen möglichst nachhaltige und umweltfreundliche Materialien einzusetzen, die Abhängigkeit von fossilen Rohstoffen zu reduzieren und den Ausstoß an Treibhausgasen zu minimieren. Ein Weg zu nachhaltigen Produkten führt über das Recycling von alten, nicht mehr benötigten Produkten, wie z. B. dem Recycling von alten Reifen, wobei das recycelte Material in die Herstellung neuer Reifen zurückgeführt wird. Ein anderer Weg, die Nachhaltigkeit von Produkten zu verbessern, besteht in der Verwendung von Substanzen aus nachwachsenden Rohstoffen als Zuschlagstoffe für Kautschukmischungen. Derartige Zuschlagstoffe aus nachwachsenden Rohstoffen sind beispielsweise Pflanzenöle, Harze auf Basis nachwachsender Rohstoffe oder Reisschalen-Silika.

Letzteres ist Silika, welches aus biobasiertem Natriumsilikat aus Reishülsenasche hergestellt wird.

Die EP 3 350 259 B1 und die EP 3 350 260 B1 offenbaren Kautschukmischungen für Reifenlaufstreifen mit einem guten Eigenschaftsprofil, die ein Terpen-Styrol-Harz und ein nicht-funktionalisiertes flüssiges Polybutadien enthalten.

In der US 10,654,995 B2 wird eine Kautschukmischung für Reifenlaufstreifen beschrieben, die ein Harz auf der Basis von α-Pinen und ein flüssiges Polybutadien, endfunktionalisiert mit Hydroxylgruppen, enthält.

Der Erfindung liegt die Aufgabe zugrunde, nachhaltige Kautschukmischungen für die Laufstreifen von Fahrzeugluftreifen bereitzustellen, die sich durch verbesserte statische und dynamische Steifigkeiten und ein verbessertes Zug-Dehnungsverhalten und dadurch im Reifen durch ein verbessertes Handlingverhalten und eine bessere strukturelle Haltbarkeit bei mechanischer Belastung im Anwendungsfall auszeichnen.

Gelöst wird diese Aufgabe erfindungsgemäß durch eine schwefelvernetzbare Kautschukmischung, insbesondere für den Laufstreifen von Fahrzeugluftreifen, die wenigstens folgende Bestandteile enthält:
- zumindest einen Dienkautschuk,
- 5 bis 70 phr (Gewichtsteile, bezogen auf 100 Gewichtsteile der gesamten Kautschuke in der Mischung) zumindest eines zu mehr als 95 % auf biologisch nachwachsenden Rohstoffen basierenden Terpenharzes,
- 5 bis 60 phr zumindest eines Weichmachers, der kein Mineralölweichmacher ist, und
- 40 - 350 phr zumindest eines Füllstoffes.

Überraschenderweise hat sich herausgestellt, dass die spezielle Kombination von zumindest einem zu mehr als 95 % auf biologisch nachwachsenden Rohstoffen basierenden Terpenharzes mit einem Weichmacher, der kein Mineralölweichmacher ist, in den angegebenen Mengen in kieselsäurehaltigen Dienkautschukmischungen zu verbesserten statischen und dynamischen Steifigkeit führt, was mit einem besseren Handlingverhalten beim Einsatz im Reifenlaufstreifen zu korrelieren ist. Gleichzeitig zeigen sich bei den erfindungsgemäßen Mischungen gute Zug-Dehnungseigenschaften, wie eine hohe Zugfestigkeit und eine hohe Reißdehung, was mit einer verbesserten strukturellen Haltbarkeit einhergeht. Bei Verwendung der erfindungsgemäßen Kautschukmischung in Laufstreifen von Fahrzeugluftreifen erhält man somit einen Fahrzeugreifen, der sich durch eine gute Nachhaltigkeit bei gutem Rollwiderstand und guter Haltbarkeit auszeichnet.

Die erfindungsgemäße Kautschukmischung zeichnet sich neben der verbesserten Nachhaltigkeit durch die verwendeten Zuschlagstoffe zusätzlich durch ein verbessertes Abriebverhalten, d. h. einen verringerten Abrieb, aus.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Unter dem Begriff "eines zu mehr als 95 % auf biologisch nachwachsenden Rohstoffen basierenden Terpenharzes" ist im Rahmen der vorliegenden Erfindung ein Terpenharz zu verstehen, das stofflich aus nachwachsenden Rohstoffen als Quelle hergestellt ist, wobei insbesondere pflanzliche Quellen bevorzugt sind.

Erfindungsgemäß enthält die Kautschukmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der bzw. die Dienkautschuk(e) ist bzw. sind dabei bevorzugt ausgewählt aus der Gruppe bestehend aus natürlichem Polyisopren (NR), synthetischem Polyisopren (IR), epoxidiertem Polyisopren (ENR), Butadien-Kautschuk (BR), Butadien-Isopren-Kautschuk, Styrol-Butadien-Kautschuk (SBR), insbesondere lösungspolymerisiertem Styrol-Butadien-Kautschuk (SSBR) und emulsionspolymerisiertem Styrol-Butadien-Kautschuk (ESBR), Styrol-Isopren-Kautschuk, Flüssigkautschuken mit einem Molekulargewicht M_{w} von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, Fluor-Kautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurten, Riemen und Schläuchen, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Gemäß einer besonders bevorzugten Ausführungsform der Erfindung ist bzw. sind der bzw. die Dienkautschuk(e) ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Die erfindungsgemäße Kautschukmischung enthält 5 bis 70 phr, bevorzugt 20 bis 60 phr, besonders bevorzugt 30 bis 50 phr, zumindest eines zu mehr als 95 % auf biologisch nachwachsenden Rohstoffen basierenden Terpenharzes. Es können auch mehrere verschiedene Terpenharze in der Mischung eingesetzt werden. Vorzugsweise basiert das Terpenharz zu 100 % auf biologisch nachwachsenden Rohstoffen.

Terpenharze, die zu mehr als 95 % auf biologisch nachwachsenden Rohstoffen basieren, können z. B. aus Rohstoffen gewonnen werden, die bei der Herstellung von Duftstoffen aus Orangenschalen anfallen. Vorzugsweise basiert das Terpenharz jedoch auf Nebenprodukten, die bei Zellstoffherstellung von Nadelhölzern anfallen. Derartige Nebenprodukte sind in großen Mengen auf dem Markt verfügbar und lassen sich großtechnisch zu Terpenharzen veredeln.

Gemäß einer bevorzugten Weiterbildung der Erfindung basiert das Terpenharz nicht auf Limonen.

Vorzugsweise basiert das Terpenharz auf α- und β-Pinen. Derartige Terpenharze lassen sich aus Nebenprodukten, die bei Zellstoffherstellung von Nadelhölzern anfallen, herstellen.

Das Terpenharz, welches zu mehr als 95 % auf biologisch nachwachsenden Rohstoffen basiert, weist vorzugsweise ein mittleres Molekulargewicht M_{w} gemäß GPC von 800 bis 1500 g/mol auf. Derartige Terpenharze lassen sich gut verarbeiten und führen zu guten Reißeigenschaften.

Gemäß einer bevorzugten Weiterbildung der Erfindung weist das Terpenharz einen Erweichungspunkt von 100 bis 140 °C, vorzugsweise 110 bis 130 °C, auf.

Für ein gutes Bremsverhalten des Reifens, dessen Laufstreifen aus der erfindungsgemäßen Kautschukmischung besteht, weist das Terpenharz eine Glasübergangstemperatur Tg gemäß DSC von der 50 bis 100 °C, vorzugsweise von 50 bis 80 °C, auf.

Als Terpenharze, die gemäß der Erfindung eingesetzt werden können, können beispielsweise solche des Typs Sylvatraxx^{®} 8115 und Sylvatraxx^{®} 8125 von der Firma Kraton Chemicals SAS zum Einsatz kommen. Diese basieren zu 100 % auf biologisch nachwachsenden Rohstoffen und nicht auf Limonen.

Die erfindungsgemäße Kautschukmischung enthält 5 bis 60 phr, vorzugsweise 10 bis 40 phr, zumindest eines Weichmachers, der kein Mineralölweichmacher ist. Es ist möglich, einen Weichmacher oder mehrere Weichmacher in Kombination einzusetzen.

Als Weichmacher, die keine Mineralölweichmacher sind, können unterschiedlichste Weichmacher, wie pflanzliche Öle, Faktisse oder Flüssig-Polymere mit einem Gewichtsmittel der Molekulargewichtsverteilung M_{w} gemäß GPC von 60.000 g/mol oder weniger, wie z. B. flüssiges Polybutadien, eingesetzt werden. Der oder die Weichmacher werden bei der Herstellung der erfindungsgemäßen Kautschukmischung bevorzugt in wenigstens einer Grundmischstufe zugegeben.

Gemäß einer vorteilhaften Weiterbildung der Erfindung wird als Weichmacher ein pflanzliches Öl, wie Sonnenblumenöl, Leinöl, Rapsöl o. Ä., eingesetzt. Dies ist aus ökologischer und ökonomischer Sicht von Vorteil und bietet in Reifen vorteilhafte Eigenschaften. Besonders bevorzugt ist, wenn das pflanzliche Öl Rapsöl ist.

In der Kautschukmischung können neben den vorgenannten Weichmachern auch Mineralölweichmacher enthalten sein. Als Mineralölweichmacher können alle dem Fachmann bekannten Mineralölweichmacher wie aromatische, naphthenische oder paraffinische Mineralölweichmacher, wie z.B. MES (mild extraction solvate) oder RAE (Residual Aromatic Extract) oder TDAE (treated distillate aromatic extract), bevorzugt mit einem Gehalt an polyzyklischen Aromaten von weniger als 3 Gew.-% gemäß Methode IP 346, eingesetzt werden. Vorzugsweise ist die erfindungsgemäße Kautschukmischung jedoch frei von Mineralölweichmachern.

Die Kautschukmischung enthält 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Es können unterschiedliche Füllstoffe im Gemisch eingesetzt werden.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Zur Reduzierung des Rollwiderstandes hat es sich als vorteilhaft erwiesen, wenn die Kautschukmischung als 20 bis 200 phr Kieselsäure als Füllstoff enthält. Zusätzlich sind weitere Füllstoffe, wie Ruß, in der Mischung enthalten, so dass ein Anteil von 40 bis 350 phr an Gesamtfüllstoff in der Mischung enthalten ist.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen. Geeignet sind auch aus Reisschalen-Asche hergestellte Kieselsäuren.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung eingesetzt. Die Silan-Kupplungsagenzien können auch im Gemisch eingesetzt werden.

Die in dieser Schrift verwendete Angabe phf (parts per hundred parts of filler by weight) ist dabei die in der Kautschukindustrie gebräuchliche Mengenangabe für Kupplungsagenzien für polare Füllstoffe. Im Rahmen der vorliegenden Anmeldung bezieht sich phf auf das vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Vorzugsweise ist zumindest ein Silan-Kupplungsagens in der Kautschukmischung 3,3'-Bis(triethoxysilylpropyl)disulfid (TESPD).

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung in Gummiprodukten, insbesondere in Fahrzeugluftreifen, herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Sie kann in unterschiedlichen Bauteilen von Fahrzeugluftreifen zum Einsatz kommen. Vorzugsweise wird sie für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in der Tabelle 1 zusammengefasst sind, näher erläutert werden.

Die Vergleichsmischungen sind dabei mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Ferner wurden aus sämtlichen Mischungen Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur gemäß ISO 868
- Rückprallelastizität bei Raumtemperatur und 70 °C gemäß ISO 4662
- Spannungswert bei 300% Dehnung (M300) bei Raumtemperatur gemäß ISO 37
- Zugfestigkeit bei Raumtemperatur gemäß ISO 37
- Reißdehnung bei Raumtemperatur gemäß ISO 37
- Durchschnittlicher dynamischer Speichermodul (E'mittel) bei 55 °C über den Dehnungssweep aus dynamisch-mechanischer Messung bei einer Frequenz von 10 Hz gemäß ISO 4664-1
- Abrieb bei Raumtemperatur gemäß DIN/ISO 4649

Eine höhere Shore-A-Härte ist mit einer höheren statischen Steifigkeit gleichzusetzen. Der dynamische Speichermodul lässt sich mit der Steifigkeit und damit mit dem Handlingverhalten korrelieren. Ein hoher dynamischer Speichermodul E'(mittel) steht für eine höhere Steifigkeit und somit für eine bessere Handlingperformance. Die Zug-Dehnungseigenschaften, wie Spannungswert, Zugfestigkeit und Reißdehung, lassen sich mit der strukturellen Haltbarkeit korrelieren.

**Tabelle 1**

| **Bestandteile** | **Einheit** | **1(V)** | **2(V)** | **3(V)** | **4(E)** |
|---|---|---|---|---|---|
| Naturkautschuk | phr | 10 | 10 | 10 | 10 |
| SSBR^{a} | phr | 90 | 90 | 90 | 90 |
| flüssiges BR^{b} | phr | 12,5 | 12,5 | - | - |
| Rapsöl | phr | - | - | 12,5 | 12,5 |
| Ruß | phr | 5 | 5 | 5 | 5 |
| Kieselsäure^{c} | phr | 115 | 115 | 115 | 115 |
| AMS-Harz^{d} | phr | 40 | - | 40 | - |
| Terpenharz^{e} | phr | - | 40 | - | 40 |
| Alterungsschutzmittel | phr | 6 | 6 | 6 | 6 |
| Ozonschutzwachs | phr | 2 | 2 | 2 | 2 |
| Zinkoxid | phr | 2 | 2 | 2 | 2 |
| Stearinsäure | phr | 1 | 1 | 1 | 1 |
| Verarbeitungshilfsmittel | phr | 6 | 6 | 6 | 6 |
| Silan-Kupplungsagens^{f} | | 8,2 | 8,2 | 8,2 | 8,2 |
| Beschleuniger | phr | 3,7 | 3,7 | 3,7 | 3,7 |
| Schwefel | phr | 1,6 | 1,6 | 1,6 | 1,6 |

| **Eigenschaften** | | | | | |
|---|---|---|---|---|---|
| Shorehärte bei RT | ShoreA | 68,0 | 66,5 | 64,3 | 65,7 |
| Rückprallelast. bei RT | % | 17,4 | 18,6 | 19,8 | 20,0 |
| Rückprallelast. bei 70 °C | % | 42,4 | 41,7 | 43,8 | 42,4 |
| M300 bei RT | MPa | 6,8 | 5,7 | 6,1 | 5,7 |
| Zugfestigkeit bei RT | MPa | 17,6 | 15,4 | 16,4 | 17,1 |
| Reißdehnung bei RT | % | 639 | 646 | 659 | 740 |
| E'(mittel) | MPa | 9,0 | 8,7 | 9,1 | 9,2 |
| Abrieb | mm3 | 64 | 98 | 73 | 85 |

| | | | | | |
|---|---|---|---|---|---|
| ^{a} Sprintan^{®} SLR-3402, Trinseo, funktionalisiertes, lösungspolymerisiertes Styrol-Butadien-Copolymer mit Funktionalisierung für die Polymer/Kieselsäure- und die Polymer/Ruß-Wechselwirkung, T_{g} = -62 °C ^{b} LBR-302, Kuraray, flüssiges Polybutadien, T_{g} = -85 °C ^{c}ZEOSIL^{®} 1165 MP, Solvay S.A., BET-Oberfläche = 155 m²/g (gemessen mit Stickstoff), CTAB-Oberfläche = 156-157 m²/g; ^{d} Sylvatraxx^{®} 4401, Kraton Chemicals SAS, Alpha-Methyl-Styrol-Harz, Erweichungspunkt = 85 °C (gemäß ASTM E 28), T_{g} = 45 °C ^{e} Sylvatraxx^{®} 8115, Kraton Chemicals SAS, nicht auf Limonen basierendes Terpenharz, Erweichungspunkt = 115 °C (gemäß ASTM E 28), T_{g} = 66 °C ^{f} 3,3'-Bis(triethoxysilylpropyl)disulfid (TESPD) | | | | | |

Aus den Daten der Tabelle 1 wird ersichtlich, dass sich durch die kombinierte Anwesenheit des Terpenharzes, welches zu mehr als 95 % auf biologisch nachwachsenden Rohstoffen basiert, mit Rapsöl in der Mischung 4(E) die Zug-Dehungseigeschaften Spannungswert, Zugfestigkeit und Reißdehnung verbessert werden, und zwar in überraschender Weise in einem Maße, das über einen additiven Effekt der Einzelmaßnahmen (alleiniger Austausch des Weichmachers 3(V) und alleiniger Austausch des Alpha-Methyl-Styrol-Harzes durch Terpenharz 2(V)) hinausgeht. Die Mischung 4(E) weist daher eine hohe strukturelle Haltbarkeit auf. Auch die Shore-A-Härte und der dynamische Speichermodul E' (mittel) sind bei Mischung 4(E) verbessert, d. h. erhöht, was in Laufstreifen von Fahrzeugluftreifen zu einem besseren Handlingverhalten führt.

Der Abrieb der erfindungsgemäßen Mischung ist ebenfalls niedrig, so dass die Mischung bei hoher Nachhaltigkeit ein gutes Eigenschaftsprofil aus Haltbarkeit, Handling und Abrieb aufweist.

## Patentansprüche

1. Schwefelvernetzbare Kautschukmischung, insbesondere für den Laufstreifen von Fahrzeugluftreifen, enthaltend wenigstens folgende Bestandteile:
- zumindest einen Dienkautschuk,
- 5 bis 70 phr (Gewichtsteile, bezogen auf 100 Gewichtsteile der gesamten Kautschuke in der Mischung) zumindest eines zu mehr als 95 % auf biologisch nachwachsenden Rohstoffen basierenden Terpenharzes,
- 5 bis 60 phr zumindest eines Weichmachers, der kein Mineralölweichmacher ist, und
- 40 - 350 phr zumindest eines Füllstoffes.

2. Schwefelvernetzbare Kautschukmischung nach Anspruch 1, **dadurch gekennzeichnet, dass** sie 20 bis 60 phr, bevorzugt 30 bis 50 phr, zumindest eines zu mehr als 95 % auf biologisch nachwachsenden Rohstoffen basierenden Terpenharzes enthält.

3. Schwefelvernetzbare Kautschukmischung nach Anspruch 1 oder 2, **dadurch gekennzeichnet, dass** das Terpenharz zu 100 % auf biologisch nachwachsenden Rohstoffen basiert.

4. Schwefelvernetzbare Kautschukmischung nach zumindest einem der vorhergehenden Ansprüche, **dadurch gekennzeichnet, dass** das Terpenharz nicht auf Limonen basiert.

5. Schwefelvernetzbare Kautschukmischung nach zumindest einem der vorhergehenden Ansprüche, **dadurch gekennzeichnet, dass** das Terpenharz auf α- und β-Pinen basiert.

6. Schwefelvernetzbare Kautschukmischung nach zumindest einem der vorhergehenden Ansprüche, **dadurch gekennzeichnet, dass** das Terpenharz ein mittleres Molekulargewicht M_{w} gemäß GPC von 800 bis 1500 g/mol aufweist.

7. Schwefelvernetzbare Kautschukmischung nach zumindest einem der vorhergehenden Ansprüche, **dadurch gekennzeichnet, dass** das Terpenharz eine Erweichungspunkt von 100 bis 140 °C, vorzugsweise 110 bis 130 °C, aufweist.

8. Schwefelvernetzbare Kautschukmischung nach zumindest einem der vorhergehenden Ansprüche, **dadurch gekennzeichnet, dass** das Terpenharz eine Glasübergangstemperatur Tg gemäß DSC von der 50 bis 100 °C, vorzugsweise von 50 bis 80 °C, aufweist.

9. Schwefelvernetzbare Kautschukmischung nach zumindest einem der vorhergehenden Ansprüche, **dadurch gekennzeichnet, dass** sie 10 bis 40 phr zumindest eines Weichmachers, der kein Mineralölweichmacher ist, enthält.

10. Schwefelvernetzbare Kautschukmischung nach zumindest einem der vorhergehenden Ansprüche, **dadurch gekennzeichnet, dass** der Weichmacher ein pflanzliches Öl, vorzugsweise Rapsöl, ist.

11. Schwefelvernetzbare Kautschukmischung nach zumindest einem der vorhergehenden Ansprüche, **dadurch gekennzeichnet, dass** sie als Füllstoff Kieselsäure enthält.

12. Schwefelvernetzbare Kautschukmischung nach Anspruch 11, **dadurch gekennzeichnet, dass** sie 50 bis 180 phr Kieselsäure enthält.

13. Schwefelvernetzbare Kautschukmischung nach Anspruch 11 oder 12, **dadurch gekennzeichnet, dass** sie 1 - 15 phf (Gewichtsteile, bezogen auf 100 Gewichtsteile Kieselsäure) zumindest eines Silan-Kupplungsagenzes enthält.

14. Fahrzeugluftreifen mit zumindest einem Bauteil, das aus einer mit Schwefel vulkanisierten Kautschukmischung nach einem der Ansprüche 1 bis 13 besteht.

15. Fahrzeugluftreifen nach Anspruch 14 mit einem Laufstreifen, dessen zumindest mit der Fahrbahn in Berührung kommender Teil aus einer mit Schwefel vulkanisierten Kautschukmischung nach einem der Ansprüche 1 bis 13 besteht.
